# EUROPEAN PATENT SPECIFICATION

(11) **EP 3 807 356 B1**
(45) Date of publication and mention of the grant of the patent: **01.07.2026**
(21) Application number: 19749863.7
(22) Date of filing: 14.06.2019
(51) Int. Cl.: C08L 7/00, C08K 5/13, C08K 5/372, C08K 5/375, C08L 9/00, C08L 9/02, C08L 9/06

(54) **A METHOD OF PREPARING VULCANIZABLE COMPOSITIONS INCLUDING DIRESORCINOL SULFIDE**
VERFAHREN ZUR HERSTELLUNG VULKANISIERBARER ZUSAMMENSETZUNGEN ENTHALTEND DIRESORCINOL SULFIDE
PROCÉDÉ DE PRÉPARATION DE COMPOSITIONS VULCANISABLES COMPRENANT DU SULFURE DE DI-RÉSORCINOL

(30) Priority: 15.06.2018 US 201862685558 P
(43) Date of publication of application: 21.04.2021
(73) Proprietor: Oxy Usa Inc., Houston, Texas 77046 (US)
(72) Inventor: ZELLER, III, Robert L., Seabrook, Texas 77586 (US); ESCOBAR, Tanner, Seven Hills, Ohio 44131 (US); TACKIE, Michael N., Seabrook, Texas 77586 (US); HOSTETLER, Jennifer, Sheffield Lake, Ohio 44054 (US)
(74) Representative: Tetzner, Michael
(86) International application number: PCT/US2019/037246
(87) International publication number: WO 2019/241668

(56) References cited:
- GB-A- 1 228 551
- JP-A- S58 122 941
- US-A- 2 711 383
- US-A- 2 755 306
- US-A- 2 760 989
- US-A- 4 051 078
- US-A1- 2014 308 864
- US-A1- 2017 174 006
- US-A1- 2018 016 433
- LEFEVRE, DESGREZ: "Diresorcyl sulfide", COMPTES RENDUS, vol. Tome 198, 1934, France, pages 1791 - 1793, XP009517474

## Description

The present invention relates to vulcanizable compositions that include diresorcinol sulfide.

### BACKGROUND OF THE INVENTION

Rubber vulcanization includes the crosslinking of rubber molecules (i.e. crosslinkable polymers), and this crosslinking generally converts what is a soft or tacky natural or synthetic rubber composition into a more durable material. Vulcanized rubber may have improved properties compared to uncured rubbers such as increased tensile strength, reduced tack, increased elasticity, as well as improved elongation to break and hardness. Typical vulcanization processes include the use of a curative such as sulfur or peroxide that is employed along with heatto crosslink the rubber. In addition to the curative, other ingredients, or co-agents, are often used to assist in vulcanization. The curative and co-agents used in the vulcanization process may be referred to as a cure package. Other co-agents in the cure package may include activators, retarders, accelerators, and coaccelerators.

Sulfur-vulcanized rubber compositions are prone to experiencing a phenomenon referred to as rubber reversion. Rubber reversion is the softening or weakening of the crosslinked rubber network that is believed to result from the breaking of sulfur crosslinks. While rubber reversion may occur in both natural and synthetic vulcanized rubbers, is particularly common in natural rubber systems. It is also known that rubber reversion is more likely to occur when certain cure packages are employed. For example, some accelerators, particularly those that may release amines during vulcanization, result in vulcanized rubbers that are more likely to undergo reversion.

Rubber reversion may occur during the vulcanization process if the rubber is overcured or excessively heated. Rubber reversion may be monitored during a vulcanization process, for example, by monitoring the modulus of the composition during the curing cycle. Rubber reversion may also occur during use of a vulcanized rubber product. For example, rubber reversion is believed to occur when airplane tires hydroplane on a wet or icy runway. Rubber reversion is also a problem when tires routinely operate under excessive running temperatures. For example, truck tires that operate at high speeds under heavy loads may experience rubber reversion.

There is, therefore, a desire to reduce rubber revision in rubber vulcanizates.

US 2018/016433 A1, US 2014/308864 A1, US 2017/174006 A1, and US 4 051 078 A disclose a rubber composirtion comprising rubber and diresorcinol sulfide. US 2 711 383 A discloses a method of bonding rubber to metal via an adherence layer comprising a reaction product of resorcinol with sulfur.

### SUMMARY OF THE INVENTION

The present invention provides a method for preparing diresorcinol sulfide according to claim 1, a method of forming a rubber composition according to claim 7, and a method of preparing a vulcanized composition according to claim 15. Preferred embodiments of the invention are defined in the dependent claims.

### BRIEF DESCRIPTION OF THE DRAWINGS

Fig. 1 is a rheology curve displaying the change in torque over 30 minutes of various embodiments of the invention and a control.
Fig. 2 is a rheology curve displaying the change in torque over 60 minutes of various embodiments of the invention and two controls that include resorcinol.

### DETAILED DESCRIPTION OF ILLUSTRATIVE EMBODIMENTS

Embodiments of the invention are based, at least in part, on the discovery of vulcanizable compositions including diresorcinol sulfide, as well as vulcanizates prepared therefrom. In one or more embodiments, the diresorcinol sulfide may be used in conjunction with a sulfur curative to effect vulcanization of the rubber. In other embodiments, diresorcinol sulfide is used as the exclusive source of sulfur in the vulcanization. It has unexpectedly been discovered that the presence of the diresorcinol sulfide provides vulcanizates that are characterized by reduced rubber reversion while otherwise maintaining a desirable balance of properties. Accordingly, embodiments are directed toward vulcanizable rubber compositions including a curable rubber and a cure package that includes diresorcinol sulfide and optionally a curative. Other embodiments are directed toward vulcanizates prepared from these vulcanizable compositions.

### VULCANIZABLE RUBBER COMPOSITION

In one or more embodiments, the vulcanizable compositions, which may be referred to as rubber compositions, include a curable rubber and a cure package that includes diresorcinol sulfide. Optionally, the rubber composition may include other components such as fillers, processing oils, tackifier resins, antioxidants, antiozonants, waxes, fatty acids, peptizers, and/or other conventional compounding additives. The rubber compositions may also include, for example as part of the cure package, additional curatives and ingredients that impact the cure such as, but not limited to, accelerators, metal oxides (e.g. zinc oxide), and the like.

### RUBBER

Suitable rubbers for use in the rubber composition include those rubbers that may be cured with a sulfur curative. Rubbers that may be cured with a sulfur curative include natural rubber or synthetic rubbers with unsaturated carbon-carbon bonds. Examples of suitable synthetic rubbers include, but are not limited to, polybutadiene rubbers (with a high or low cis content), styrene-butadiene rubbers (SBR), polyisoprene, butyl rubber, halobutyl rubbers (i.e. chlorobutyl rubber or bromobutyl rubber), polychloroprene, styrene/isoprene/butadiene rubber, copolymers of 1,3-butadiene or isoprene with monomers such as styrene, acrylonitrile and methyl methacrylate, ethylene/propylene terpolymers, also known as ethylene/propylene/diene monomer (EPDM), and in particular, ethylene/propylene/dicyclopentadiene terpolymers, and combinations thereof.

In one or more embodiments, the rubber may be a blend of natural rubber and one or more synthetic rubbers. In these or other embodiments, the natural rubber may be blended with one or more of the synthetic polymers described above. Specific examples of blends of natural rubber include natural rubber-polybutadiene blends and natural rubberstyrene-butadiene rubber blends.

### DIRESORCINOL SULFIDE

In one or more embodiments, the diresorcinol sulfide includes those compounds that have a resorcinol group, which may also be referred to as benzene-1,3-diol group, tethered to a second resorcinol group via a sulfur atom or a chain of sulfur atoms. In one or more embodiments, the chain of sulfur atoms includes at least two sulfur atoms. In one or more embodiments, the diresorcinol sulfide may be defined by the formula: 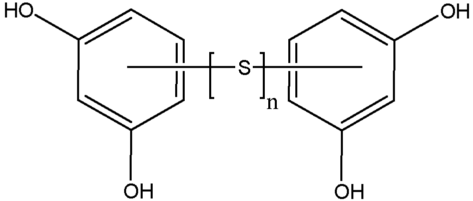
where n is an integer from about 1 to about 8. In one or more embodiments, n is an integer from about 2 to about 7, and in other embodiments an integer from about 3 to about 6. In other embodiments, where the sulfur atom or chain of sulfur atoms is attached at the 4 position of each resorcinol group, the diresorcinol sulfides may be defined by the formula: 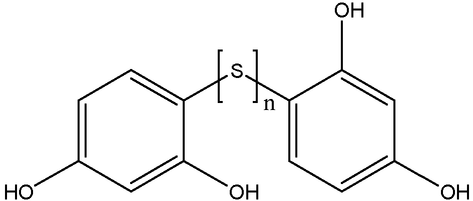
where n is an integer from about 1 to about 8. In one or more embodiments, n is an integer from about 2 to about 7, and in other embodiments an integer from about 3 to about 6.

Those skilled in the art will appreciate that a composition that includes diresorcinol sulfide will include a plurality of diresorcinol molecules, and this composition can be characterized by the average chain length of sulfur atoms (i.e. the average number of sulfur atoms in the chains that tether the resorcinol groups). In one or more embodiments, the diresorcinol sulfide composition may have an average sulfur-atom chain length that is from about 1.5 sulfur atom to about 8 sulfur atoms, in other embodiments may have from about 2 sulfur atoms to about 7 sulfur atoms, and in other embodiments may have from about 3 sulfur atoms to about 6 sulfur atoms.

In one or more embodiments, the diresorcinol sulfide may be prepared by combining resorcinol and sulfur in the presences of a catalyst to form a reaction mixture, which is heated to produce the diresorcinol sulfide and hydrogen sulfide. In one or more embodiments, a neat mixture of the reactants may be prepared or a small amount of water or other solvent may be used to solubilize or transfer the reactants. In other embodiments, the reaction may take place in a solvent such as toluene.

In one or more embodiments, the reaction mixture may be heated until the sulfur (S₈) is substantially consumed. For example, the reaction mixture may be heated until at least 80%, in other embodiments at least 90%, in other embodiments at least 95%, and in other embodiments at least 99% of the sulfur is consumed (i.e. reacted with the resorcinol). In one or more embodiments, the reaction mixture is heated until the reaction mixture is devoid of free sulfur, which may also be referred to as reactant sulfur. In these or other embodiments, the reaction mixture may be heated for about 0.5 hour to about 10 hours, and in other embodiments for about 6 hours to about 8 hours. The reaction mixture may be heated in the temperature range of about 160 °C to about 200 °C, and in other embodiments about 170 °C to about 190 °C.

The diresorcinol sulfide is formed by a two-step process where the first step of the process is conducted at a first temperature and the second step of the process is conducted at a second temperature. Sulfur (S₈) is reacted with resorcinol at a temperature in the range of about 150 °C to about 200 °C, in other embodiments from about 160 °C to about 185 °C, and in other embodiments from about 170 °C to about 180 °C. The reaction is maintained at within this temperature range for a time sufficient to consume at least 80%, in other embodiments at least 90%, in other embodiments at least 95%, and in other embodiments at least 99% of the sulfur (S₈). In particular embodiments, the reaction is maintained at this first temperature range until the reactant sulfur (S₈) is substantially consumed, and in other embodiments, the sulfur reactant is completely consumed. Once a desired amount of the reactant sulfur is consumed in the first step of the process, which occurs at a first temperature, then the temperature is increased for the second step of the process. Namely, the temperature of the reaction mixture is increased to a temperature in the range of about 205 °C to about 250 °C, in other embodiments from about 210 °C to about 240 °C, in other embodiments from about 215 °C to about 235 °C. This increased temperature is maintained for a period sufficient to stabilize the resorcinol sulfide. In one or more embodiments, this temperature is maintained for at least 10 minutes, in other embodiments atleast 20 minutes, and in other embodiments at least 30 minutes. In certain embodiments, the temperature may be maintained in the range of about 160 °C to about 200 °C for about 6 hour to about 8 hours and then ramped up to about 230 °C to about 250 °C for about 0.2 hour to about 1 hour.

Suitable basic catalysts for use in the production of the diresorcinol sulfide include alkali bases such as sodium hydroxide and potassium hydroxide. Suitable acidic catalysts include para-toluene sulfonic acid (PTSA). In certain embodiments, a small amount of water, such as about 0.5 wt % to about 3 wt % based on the total weight of the reactants, may be used to solubilize or transfer the catalyst.

In one or more embodiments, the reactants used to prepare the diresorcinol sulfide may be quantified by parts by weight based upon 100 parts by weight of the total weight of the reactants and the catalyst. In one or other embodiments, the amount of sulfur may be from about 10 parts to about 50 parts, in other embodiments from about 15 parts to about 40 parts, and in other embodiments from about 20 parts to about 30 parts per 100 parts by weight of the total weight of the reactants and the catalyst. In these or other embodiments, the amount of resorcinol may be from about 50 parts to about 90 parts, in other embodiments from about 60 parts to about 85 parts, and in other embodiments from about 70 parts to about 80 parts per 100 parts by weight of the total weight of the reactants and the catalyst. In these or other embodiments, the amount of catalyst may be from about 0.001 parts to about 1.5 parts, in other embodiments from about 0.005 parts to about 1.4 parts, in other embodiments from about 0.01 parts to about 1.3 parts, in other embodiments from about 0.05 parts to about 1.0 parts, and in other embodiments from about 0.1 parts to about 0.8 parts by weight per 100 parts by weight of the total weight of the reactants and the catalyst.

In one or more embodiments, where S₈ is employed as the sulfur reactant, the amount of sulfur may be described as a molar ratio of S₈ to resorcinol. In one or more embodiments, the molar ratio of S₈ to resorcinol may be from about 0.045:1 to about 0.45:1, in other embodiments from about 0.1:1 to about 0.35:1, and in other embodiments from about 0.15:1 to about 0.3:1.

In other embodiments, the diresorcinol sulfide may be prepared by reacting resorcinol with sulfur dichloride or a polysulfur dichloride in a suitable solvent (outside of the present invention). Processes for preparing a diresorcinol sulfide are disclosed in US 2,760,989 A, US 2 755 306 A and US 3,429,814 A.

### CURE PACKAGE

In one or more embodiments, the rubber composition (or in certain embodiments the cure package) may include a curative in addition to the diresorcinol sulfide. In one or more embodiments, the curative includes a sulfur-based curative. In one or more embodiments, the sulfur-based curative, which may be referred to as a sulfur donor, includes elemental sulfur (free sulfur), allotropes of sulfur (such as S₈), amine disulfides, polymeric polysulfides, and sulfur olefin adducts.

### CO-AGENTS

In one or more embodiments, the rubber composition (or in certain embodiments the cure package) may include a cure co-agent, which refers to those compounds that have an appreciable impact on the cure. In one or more embodiments, the co-agent may include an activator, which may be used to improve acceleration and allow the cure system to reach its full crosslinking potential. Suitable activators include zinc compounds, stearic acid, or combinations thereof. Examples zinc compounds include, but are not limited to, zinc oxide (ZnO) and zinc fatty acid carboxylates.

In one or more embodiments, a retarder is employed as a co-agent. A retarder may be used to reduce the tendency of a rubber compound to vulcanize prematurely by increasing scorch delay. Suitable retarders include N-(cyclohexylthio) phthalimide and stearic acid.

In one or more embodiments, an accelerator is employed in the cure package. Accelerators are used to control the time and/or temperature required for vulcanization and to improve the properties of the vulcanizate. In one embodiment, a single accelerator system may be used (i.e. primary accelerator). In other embodiments, a combination of accelerators may be used (i.e. a primary accelerator and a secondary accelerator). Combinations of accelerators may produce a synergistic effect on the final properties and are often somewhat better than those produced by use of either accelerator alone. In these or other embodiments, one of the accelerators may be a delayed-action accelerator. A delayed-action accelerator may be used which are not affected by normal processing temperatures but produce a satisfactory cure at ordinary vulcanization temperatures. Exemplary accelerators include amines, disulfides, guanidines, thioureas, thiazoles, thiurams, sulfenamides, dithiocarbamates, dithiocarbamic acids, aldehyde-amines, aldehyde-ammonias, imidazoline, and xanthates. In one or more embodiments where a combination of accelerators is employed, the primary accelerator may be a sulfenamide, and the secondary accelerator may be a guanidine, dithiocarbamate or thiuram compound.

Specific examples of sulfonamide accelerators include N-cyclohexyl-2-benzothiazyl sulfenamide (CBS), N-tert-butyl-2-benzothiazyl sulfenamide (TBBS), N,N-dicyclohexyl-2-benzothiazyl sulfenamide, N-oxydiethylene-2-benzothiazyl sulfenamide, and N,N-diisopropyl-2-benzothiazole sulfonamide.

Specific examples of thiazole accelerators include 2-mercaptobenzothiazole (MBT), dibenzothiazyl disulfide (MBTS), sodium salt of 2-mercaptobenzothiazole, zinc salt of 2-mercaptobenzothiazole, copper salt of 2-mercaptobenzothiazole, cyclohexylamine salt of 2-mercaptobenzothiazole, 2-(2,4-dinitrophenyl)mercaptobenzothiazole, and 2-(2,6-diethyl-4-moerpholinothio)benzothiazole.

Specific examples of thiuram accelerators include tetramethylthiuram disulfide (TMTD), tetraethylthiuram disulfide, tetramethylthiuram monosulfide, dipentamethylenethiuram disulfide, dipentamethylenethiuram monosulfide, dipentamethylenethiuram tetrasulfide, dipentamethyelnethiuram hexasulfide, tetrabutylthiuram disulfide, and pentamethylenethiuram tetrasulfide.

Specific examples of thiourea accelerators include thiacarbamide, diethylthiourea, dibutylthiourea, trimethylthiourea, and di-ortho-tolylthiourea.

Specific examples of guanidine accelerators include diphenylguanidine, di-ortho-tolylguanidine, triphenylguanidine, ortho-tolylbiguanide, and diphenylguanidine phthalate.

Specific examples of dithiocarbamic acid accelerators include zinc ethylphenyldithiocarbamate, zinc butylphenyldithiocarbamate, sodium dimethyldithiocarbamate, zinc dimethyldithiocarbamate, zinc diethyldithiocarbamate, zinc dibutyldithiocarbamate, zinc diamyldithiocarbamate, zinc dipropyldithiocarbamate, a complex salt of zinc pentamethylenedithiocarbamate and piperidine, zinc hexadecylisopropyldithiocarbamate, zinc octadecylisopropyldithiocarbamate, zinc dibenzyldithiocarbamate, sodium diethyldithiocarbamate, piperidine pentamethylenedithiocarbamate, selenium dimethyldithiocarbamate, tellurium diethyldithiocarbamate, and cadmium diamyldithiocarbamate.

Specific examples of aldehyde-amine and aldehyde-ammonia-based accelerators include acetaldehyde-aniline reaction product, butylaldehyde-aniline condensate, hexamethylenetetramine, and acetaldehyde-ammonia reaction product.

A specific example of an imidazoline accelerator is 2-mercaptoimidazoline. A specific example of a xanthate accelerator is dibutyl xanthogenate.

### FILLERS

As described above, the vulcanizable compositions may also include fillers including reinforcing and non-reinforcing fillers. Suitable fillers include silica, carbon black, clay, organic fiber, inorganic metal powder, mineral powder, talc, calcium sulfate, calcium silicate, and combinations thereof. Exemplary silicas include precipitated silicas, fumed, and surface-treated silica products. Exemplary carbon blacks include furnace black, thermal, black and channel black.

### OILS AND EXTENDERS

As described above, the vulcanizable compositions may also include oils and/or extenders. In one or more embodiments, the rubber composition may include a processing oil. In certain embodiments, the processing oil may be used in the rubber composition as an extending oil to extend elastomers. The processing oil used may include both extending oil present in the elastomers, and processing oil added during compounding. Suitable processing oils include various oils as are known in the art, including aromatic, paraffinic, naphthenic, vegetable oils, and low PCA oils, such as MES, TDAE, SRAE and heavy naphthenic oils.

### INGREDIENT AMOUNTS

In one or more embodiments, the rubber composition may be quantified by the percent by weight of rubber in the total weight of the rubber composition. In one or more embodiments, the rubber composition includes greater than 10% by weight, in other embodiments greater than 25% by weight, and in other embodiments greater than 35% by weight rubber based upon the total weight of the rubber composition. In these or other embodiments, the rubber composition includes less than 99% by weight, in other embodiments less than 90% by weight, and in other embodiments less than 80% by weight rubber based upon the total weight of the rubber composition. In one or more embodiments, the rubber composition includes from about 10% by weight to about 99% by weight, in other embodiments from about 25% by weight to about 90% by weight, and in other embodiments from about 10% by weight to about 80% by weight rubber based upon the total weight of the rubber composition.

In certain embodiments, where the rubber includes natural rubber and one or more synthetic rubbers, the rubber composition may be characterized by the percent weight natural rubber based upon the total weight of the natural and synthetic rubber. In one or more embodiments, the natural rubber is greater than 1% by weight, in other embodiments greater than 5% by weight, in other embodiments greater than 10% by weight, in other embodiments greater than 15% by weight, and in other embodiments greater than 30% by weight based upon the total weight of the natural and synthetic rubber. In these or other embodiments, the natural rubber is less than 99% by weight, in other embodiments less than 90% by weight, in other embodiments less than 80% by weight, in other embodiments less than 70% by weight, and in other embodiments less than 60% by weight based upon the total weight of the natural and synthetic rubber. In one or more embodiments, the natural rubber is from about 1% by weight to about 99% by weight, in other embodiments from about 5% by weight to about 90% by weight, in other embodiments from about 10% by weight to about 80% by weight, in other embodiments from about 15% by weight to about 70% by weight, and in other embodiments from about 30% by weight to about 60% by weight based upon the total weight of the natural and synthetic rubber.

In one or more embodiments, the components of the rubber composition may be described by in parts by weight of the component per 100 parts by weight rubber (phr).

In one or more embodiments, the amount of diresorcinol sulfide in the rubber composition may be greater than 0.1 phr, in other embodiments greater than 0.2 phr, and other embodiments greater than 0.4 phr of diresorcinol sulfide. In these other embodiments, the rubber composition may include less than 15 phr, in other embodiments less than 12 phr, in other embodiments less than 10 phr, in other embodiments less than 8 phr, in other embodiments less than 6 phr, in other embodiments less than 4 phr, in other embodiments less than 2 phr, and other embodiments less than 1 phr of diresorcinol sulfide. In one or more embodiments, the rubber composition may include from about 0.1 phr to about 15 phr, in other embodiments from about 0.2 phr to about 12 phr, and other embodiments from about 0.4 phr to about 10 phr of a diresorcinol sulfide.

In one or more embodiments, where the rubber composition includes an additional curative (e.g. sulfur donor curative other than diresorcinol sulfide), the amount of curative in the rubber composition may be greater than 0.5 phr, in other embodiments greater than 1 phr, and other embodiments greater than 1.5 phr of a sulfur curative. In these other embodiments, the rubber composition may include less than 8 phr, in other embodiments less than 6 phr, and other embodiments less than 4 phr of a curative. In one or more embodiments, the rubber composition may include from about 0.5 phr to about 8 phr, in other embodiments from about 1 phr to about 6 phr, and other embodiments from about 1.5 phr to about 4 phr of a curative.

In one or more embodiments, the rubber compositions may also be described with reference to the total sulfur within the composition. As the skilled person will appreciate, the sulfur is contributed by the diresorcinol sulfide and by other sulfur donor compounds such as the curative. In one or more embodiments, the rubber compositions includes greater than 0.5 phr, in other embodiments greater than 1 phr, and other embodiments greater than 1.5 phr of total sulfur. In these other embodiments, the rubber composition may include less than 8 phr, in other embodiments less than 6 phr, and other embodiments less than 4 phr of sulfur. In one or more embodiments, the rubber composition may include from about 0.5 phr to about 8 phr, in other embodiments from about 1 phr to about 6 phr, and other embodiments from about 1.5 phr to about 4 phr sulfur.

In one or more embodiments, where the rubber composition includes an activator, the amount of activator in the rubber composition may be greater than 0.1 phr, in other embodiments greater than 0.5 phr, and other embodiments greater than 1 phr of an activator. In these other embodiments, the rubber composition may include less than 20 phr, in other embodiments less than 10 phr, and other embodiments less than 6 phr of an activator. In one or more embodiments, the rubber composition may include from about 0.1 phr to about 20 phr, in other embodiments from about 0.5 phr to about 10 phr, and other embodiments from about 1 phr to about 6 phr of an activator.

In one or more embodiments, where the rubber composition includes a retarder, the amount of retarder in the rubber composition may be greater than 0.01 phr, in other embodiments greater than 0.05 phr, and other embodiments greater than 0.1 phr of a retarder. In these other embodiments, the rubber composition may include less than 5 phr, in other embodiments less than 3 phr, and other embodiments less than 2 phr of a retarder. In one or more embodiments, the rubber composition may include from about 0.01 phr to about 5 phr, in other embodiments from about 0.5 phr to about 5 phr, and other embodiments from about 0.1 phr to about 2 phr of a retarder.

In one or more embodiments, where the rubber composition includes a primary accelerator, the amount of primary accelerator in the rubber composition may be greater than 0.3 phr, in other embodiments greater than 0.5 phr, and other embodiments greater than 0.8 phr of a primary accelerator. In these other embodiments, the rubber composition may include less than 4 phr, in other embodiments less than 3 phr, and other embodiments less than 1.5 phr of a primary accelerator. In one or more embodiments, the rubber composition may include from about 0.3 phr to about 4 phr, in other embodiments from about 0.5 phr to about 3 phr, and other embodiments from about 0.8 phr to about 1.5 phr of a primary accelerator.

In one or more embodiments, where the rubber composition includes a secondary accelerator, the amount of secondary accelerator in the rubber composition may be greater than 0.5 phr, in other embodiments greater than 0.8 phr, and other embodiments greater than 1 phr of a secondary accelerator. In these other embodiments, the rubber composition may include less than 3 phr, in other embodiments less than 2 phr, and other embodiments less than 1.5 phr of a secondary accelerator. In one or more embodiments, the rubber composition may include from about 0.5 phr to about 3 phr, in other embodiments from about 0.8 phr to about 2 phr, and other embodiments from about 1 phr to about 1.5 phr of a secondary accelerator.

In one or more embodiments, where the rubber composition includes a silica, the amount of silica in the rubber composition may be greater than 5 phr, in other embodiments greater than 10 phr, and other embodiments greater than 20 phr silica. In these other embodiments, the rubber composition may include less than 150 phr, in other embodiments less than 100 phr, and other embodiments less than 80 phr silica. In one or more embodiments, the rubber composition may include from about 5 phr to about 150 phr, in other embodiments from about 10 phr to about 100 phr, and other embodiments from about 20 phr to about 80 phr silica.

In one or more embodiments, where the rubber composition includes carbon black, the amount of carbon black in the rubber composition may be greater than 5 phr, in other embodiments greater than 10 phr, and other embodiments greater than 20 phr carbon black. In these other embodiments, the rubber composition may include less than 150 phr, in other embodiments less than 100 phr, and other embodiments less than 80 phr carbon black. In one or more embodiments, the rubber composition may include from about 5 phr to about 150 phr, in other embodiments from about 10 phr to about 100 phr, and other embodiments from about 20 phr to about 80 phr carbon black.

In one or more embodiments, where the rubber composition includes a processing oil, the amount of processing oil in the rubber composition may be greater than 1 phr, in other embodiments greater than 5 phr, and other embodiments greater than 20 phr of a processing oil. In these other embodiments, the rubber composition may include less than 70 phr, in other embodiments less than 50 phr, and other embodiments less than 35 phr of a processing oil. In one or more embodiments, the rubber composition may include from about 1 phr to about 70 phr, in other embodiments from about 5 phr to about 50 phr, and other embodiments from about 20 phr to about 35 phr of processing oil.

### PREPARATION OF VULCANIZABLE COMPOSITION

In one or more embodiments, the vulcanizable compositions may be prepared by mixing the various ingredients using conventional rubber mixing (also referred to as compounding) techniques. For example, the compositions can be mixed by kneading the rubber, cure package, and other rubber composition components using a mixing machine such as Banbury mixers, kneaders or rollers. In certain embodiments, the ingredients are mixed in at least two stages. For example, one or more non-productive stages may be followed by a productive mix stage. Productive mix stages are stages that are performed at a temperature, or ultimate temperature, lower than the mix temperature of the preceding non-productive mix stage. In or more embodiments, the rubber and fillers are included in the first non-productive mix stage. In these or other embodiments, the curative is added in the final, productive mix stage. In certain embodiments, some components of the rubber composition may be premixed prior to being mixed with the rubber. For example where both silica and carbon black are employed as a filler, they may be premixed prior to inclusion into the rubber composition.

### RUBBER VULCANIZATION

Vulcanization of the rubber composition is generally carried out at conventional temperatures. In one or more embodiments, vulcanization may take place at a temperature ranging from about 100 °C to 200 °C, in other embodiments from about 110 °C to 180 °C, and in other embodiments from about 120 °C to 170 °C. Any conventional vulcanization processes may be used, such as heating in a press or mold, heating with superheated steam or hot air or in a salt bath.

### INDUSTRIAL APPLICABILITY

In one or more embodiments, the vulcanized rubber may be used in tire or a tire component. Specific examples of tire components include, but are not limited to, treads and sidewalls. Exemplary tires that may include the vulcanized rubber include bicycle tires, passenger vehicle tires, bus or truck tire, aircraft tires and heavy equipment tires. Other examples of rubber articles that may be prepared with the vulcanized rubber include shoe soles, rubber hoses, mechanical belts, conveyor belts.

In order to demonstrate the practice of the present invention, the following examples have been prepared and tested. The examples should not, however, be viewed as limiting the scope of the invention. The claims will serve to define the invention.

### EXAMPLES

### Samples 1-5

A first set of samples (i.e. rubber compositions) were prepared to investigate the effect of diresorcinol sulfide on rubber reversion in vulcanized rubber compositions. The samples were compared to a control that did not include diresorcinol sulfide.

The diresorcinol sulfide used for this first reversion study was made by reacting 0.94 moles S₈ with 3.28 moles resorcinol, giving a reactant ratio of 0.29:1. The reactants were heated and agitated in a nitrogen environment. Once the mix reached 170 °C, 0.01 mole sodium hydroxide in 0.15 mole water added to reactor to catalyze reaction. After 8 hours at 170 °C, the diresorcinol sulfide cooled. Once cooled, the diresorcinol sulfide was stored under a nitrogen blanket. Testing of the diresorcinol sulfide concluded that the final sulfur content of the product was 34.2% by weight, giving a final S₈ to resorcinol ratio of 0.22:1.

The rubber compositions were prepared by combining natural rubber, 50 phr of carbon black, 3 phr of stearic acid, 5 phr of zinc oxide, and 0.6 phr of MBTS. The amount of sulfur and diresorcinol sulfide in each rubber composition is provided in Table 1. The sulfur content in diresorcinol sulfide used was 34.2% by weight. Tensile, elongation at break, and modulus values were determined using slabs cured based upon t₉₀+2 minutes following procedures analogous to ASTM D412.

**Table 1**

| | Control A | 1 | 2 | 3 | 4 | 5 |
|---|---|---|---|---|---|---|
| Material | phr | phr | phr | phr | phr | phr |
| Sulfur | 2.5 | 2.5 | | 2.5 | | 1.25 |
| Diresorcinol sulfide (34.2% Sulfur) | | 3.65 | 3.65 | 7.31 | 7.31 | 5.48 |
| Total parts sulfur | 2.5 | 3.75 | 1.25 | 5.0 | 2.50 | 3.12 |
| Total parts | 161.10 | 164.75 | 162.25 | 168.41 | 165.91 | 165.33 |
| Min Torque, ML, lbf-inch | 2.91 | 3.86 | 3.34 | 4.02 | 3.96 | 3.61 |
| Cure Time, T50, min | 2.27 | 2.94 | 2.42 | 3.52 | 2.61 | 2.88 |
| Cure Time, T90, min | 7.24 | 9.19 | 8.22 | 12.13 | 8.11 | 8.75 |
| Scorch Time, TS2, min | 1.04 | 0.9 | 1.58 | 1.01 | 1.13 | 1.07 |
| Max Torque, MH, lbf-inch | 16.27 | 17.27 | 9.04 | 17.81 | 12.12 | 14.08 |
| MDR Torque at 30 min, lbf-inch | 15.2 | 16.9 | 9.0 | 17.8 | 12.1 | 13.8 |
| Reversion %, 1-MDR/Max Torque | 7% | 2% | 0% | 0% | 0% | 2% |
| Shore A Durometer, pts. | 64 | 64 | 56 | 68 | 63 | 63 |
| Tensile, psi | 3810 | 3294 | 2270 | 2920 | 2607 | 2882 |
| Elongation at break % | 511 | 502 | 561 | 479 | 520 | 502 |
| 50% Modulus, psi | 211 | 202 | 119 | 218 | 154 | 177 |
| 100% Modulus, psi | 385 | 339 | 167 | 365 | 242 | 287 |
| 200% Modulus, psi | 1029 | 823 | 383 | 828 | 570 | 679 |
| 300% Modulus, psi | 1931 | 1553 | 775 | 1488 | 1092 | 1293 |

### Samples 6-8

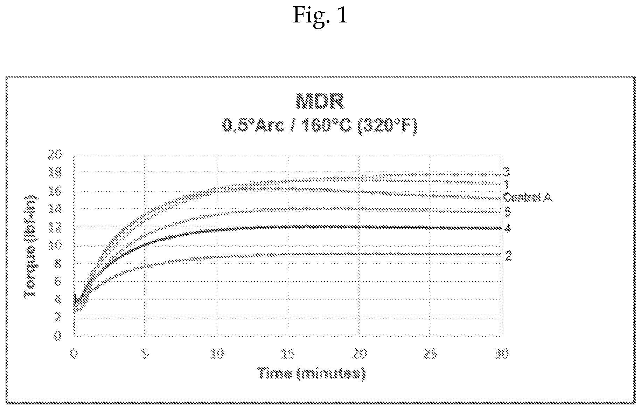

The torque of each sample was monitored during curing to prepare a rheology curve, which is displayed as Fig. 1. As can be seen in Fig. 1, the control showed the largest percent decrease in torque after max torque is achieved. In comparison, the samples that included diresorcinol sulfide showed either a small decrease in torque or no decrease in torque after max torque is achieved. This indicates that diresorcinol sulfide helps to reduce rubber reversion. By comparing the mechanical properties in Table 1, it can be seen that the addition of diresorcinol sulfide did not impact the mechanical properties.

A second set of samples were prepared to investigate the effect of diresorcinol sulfide on rubber reversion in vulcanized rubber compositions over an extended period. Further, the samples where compared to controls that lack diresorcinol sulfide, but includes resorcinol.

The samples were prepared by combining natural rubber, 50 phr of carbon black, 3 phr of stearic acid, 5 phr of zinc oxide, and 0.6 phr of MBTS. The amount of sulfur and diresorcinol sulfide in each rubber composition is provided in Table 2. The sulfur content in the diresorcinol sulfide used was 34.2% by weight. Tensile, elongation at break, and modulus values were determined using slabs cured based upon t₉₀+2 minutes following procedures analogous to ASTM D412.

**Table 2**

| | Control B | Control C | 6 | 7 | 8 |
|---|---|---|---|---|---|
| Material | phr | phr | phr | phr | phr |
| Sulfur | 2.5 | 2.5 | | 2.5 | 1.25 |
| Diresorcinol sulfide (34.2% Sulfur) | | | 7.3 | 7.3 | 3.65 |
| Resorcinol | 4.80 | 7.3 | - | - | 2.4 |
| Total parts sulfur | 2.5 | 2.5 | 2.5 | 5.0 | 2.5 |
| Total parts resorcinol | 4.8 | 7.3 | 4.8 | 4.8 | 4.8 |
| Total parts | 165.9 | 168.4 | 165.9 | 168.4 | 165.9 |
| Min Torque, ML, lbf-inch | 2.15 | 2.31 | 3.46 | 13.96 | 3.44 |
| Cure Time, T50, min | 2.74 | 1.73 | 2.74 | 15.1 | 2.54 |
| Cure Time, T90, min | 7.18 | 3.84 | 7.32 | 19.46 | 8.02 |
| Scorch Time, TS2, min | 1.36 | 1.29 | 1.92 | >(60) | 1.44 |
| Max Torque, MH, lbf-inch | 11.05 | 7.74 | 9.44 | 14.36 | 10.44 |
| MDR Torque at 60 min, lbf-inch | 8.0 | 5.9 | 9.0 | 12.6 | 9.9 |
| Reversion %, 1-MDL/Max Torque | 28% | 24% | 5% | 16% | 5% |
| Shore A Durometer, pts. | 65 | 65 | 56 | 66 | 60 |
| Tensile, psi | 3162 | 2898 | 2180 | 1940 | 2751 |
| Elongation at break % | 545 | 555 | 487 | 354 | 476 |
| 50% Modulus, psi | 199 | 190 | 143 | 227 | 187 |
| 100% Modulus, psi | 307 | 276 | 216 | 366 | 300 |
| 200% Modulus, psi | 684 | 579 | 492 | 825 | 721 |
| 300% Modulus, psi | 1279 | 1071 | 954 | 1509 | 1369 |

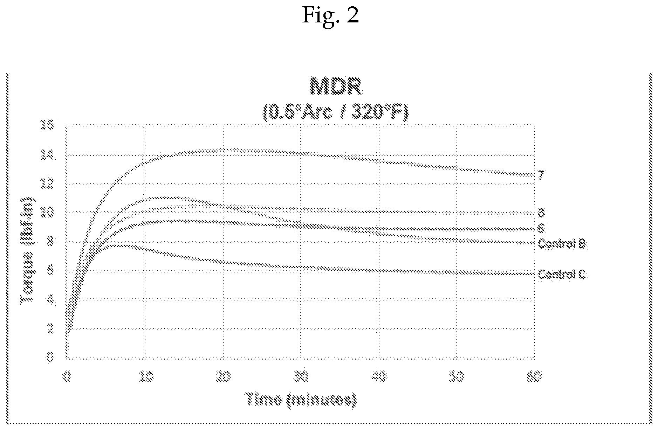

The torque of each sample was monitored during curing to prepare a rheology curve, which is displayed as Fig. 2. As can be seen in Fig. 2, the two Controls, which include free resorcinol, showed the largest percent decrease in torque after max torque is achieved. In comparison, the samples that included diresorcinol sulfide showed a small decrease in torque after max torque is achieved. This indicates that diresorcinol sulfide, not resorcinol, helps to reduce rubber reversion. As with the previous samples, the addition of diresorcinol sulfide did not impact the mechanical properties.

### Samples 9-10

A sample (Sample 9) of diresorcinol sulfide was made by reacting 0.94 moles S₈ with 3.28 moles resorcinol, giving a reactant ratio of 0.29:1. The reactants were heated and agitated in a nitrogen environment. Once the mix reached 170 °C, 0.01 mole sodium hydroxide in 0.12 mole water was added to the reactor to catalyze reaction. After 8 hours at 170 °C, the diresorcinol sulfide cooled. Once cooled, an aliquot of the diresorcinol sulfide was stored in atmosphere with the remaining diresorcinol stored under nitrogen. The product stored in atmosphere (i.e. exposed to air) showed instability within 5 days, as indicated by the yellowing of the surface. Product stored under nitrogen showed stability for an indefinite time.

A second sample (Sample 10) of diresorcinol sulfide was made by reacting 0.94 moles S₈ with 3.29 moles resorcinol, giving a reactant ratio of 0.29:1. The reactants were heated and agitated in a nitrogen environment. Once the mix reached 170 °C, 0.02 mole sodium hydroxide in 0.13 mole water was added to the reactor to catalyze reaction. After 8 hours at 170 °C, which was believed to substantially consume all of the reactant sulfur, the reaction was ramped to 245 °C. Once at temperature, the reaction was held for 0.5 hours and then cooled. An aliquot of the diresorcinol sulfide was stored in atmosphere with the remaining diresorcinol stored under nitrogen. Both samples showed indefinite stability, as indicated by an unchanging surface appearance.

A comparison of Sample 9 to Sample 10 shows that by increasing the temperature of the reaction after substantial consumption of the reactant sulfur, the diresorcinol sulfide is stable under atmospheric conditions, while when simply reacted to completion under isothermal conditions, the diresorcinol sulfide is not stable when exposed to the atmosphere.

## Claims

1. A method for preparing diresorcinol sulfide, the method comprising reacting sulfur with resorcinol, comprising:
(i) reacting sulfur with resorcinol at a temperature of from 150 °C to 200 °C to form a reaction mixture; and
(ii) heating the reaction mixture to a temperature of from 205 °C to 250 °C

2. The method of claim 1, where said sulfur is Sg.

3. The method of claim 1, where the molar ratio of S₈ to resorcinol is 0.045:1 to 0.45:1, preferably 0.1:1 to 0.35:1, most preferably 0.15:1 to 0.3:1.

4. The method of claim 1, wherein, in step (i), the reaction mixture is maintained within the temperature range of from 150 °C to 200 °C for a time sufficient to consume at least 80% of the sulfur.

5. The method of claims 1 or 4, wherein reacting sulfur with resorcinol is carried out in the presence of a basic or acidic catalyst.

6. The method of claim 5, wherein the basic or acidic catalyst is selected from sodium hydroxide, potassium hydroxide, and para-toluene sulfonic acid.

7. A method of forming a rubber composition comprising:
(i) mixing a rubber and
(ii) a diresorcinol sulfide prepared by the method of claim 1.

8. The method of claim 7, further comprising a sulfur-donor compound in addition to the diresorcinol sulfide, preferably where the sulfur-donor compound is elemental sulfur.

9. The method of claim 7 or 8, where the diresorcinol sulfide is defined by the formula: 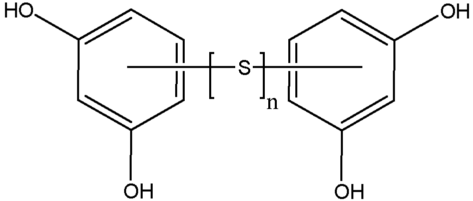 where n is an integer from 1 to 8.

10. The method of any of claims 7 to 9, where the diresorcinol sulfide is defined by the formula: 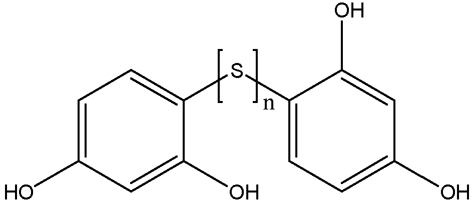 where n is an integer from 1 to 8.

11. The method of any of claims 7 to 10, where the rubber is natural rubber or the rubber is a blend of natural rubber and a synthetic rubber.

12. The method of any of claims 7 to 11, where the rubber is selected from natural rubber, polybutadiene rubber, styrene-butadiene rubber, polyisoprene, butyl rubber, halobutyl rubber, polychloroprene, styrene/isoprene/butadiene rubber, copolymers of 1,3-butadiene or isoprene with monomers such as styrene, acrylonitrile and methyl methacrylate, ethylene/propylene terpolymers, and combinations thereof.

13. The method of any of claims 7 to 12, where the composition includes from 0.1 phr to 15 phr diresorcinol sulfide.

14. The method of any of claims 7 to 13, wherein further a cure package that includes an accelerator is mixed with the rubber and the diresorcinol sulfide.

15. A method of preparing a vulcanized composition comprising:
(i) preparing a rubber composition including, a rubber, diresorcinol sulfide, and an optional curative other than diresorcinol sulfide, wherein the diresorcinol sulfide is prepared by claim 1; and
(ii) curing the rubber composition.

## Patentansprüche

1. Verfahren zur Herstellung von Diresorcinolsulfid, wobei das Verfahren Umsetzen von Schwefel mit Resorcin umfasst, umfassend:
(i) Umsetzen von Schwefel mit Resorcin bei einer Temperatur von 150 °C bis 200 °C, um ein Reaktionsgemisch zu bilden; und
(ii) Erhitzen des Reaktionsgemischs auf eine Temperatur von 205 °C bis 250 °C

2. Verfahren nach Anspruch 1, wobei der Schwefel S₈ ist.

3. Verfahren nach Anspruch 1, wobei das Molverhältnis von S₈zu Resorcinol 0,045:1 bis 0,45:1, vorzugsweise 0,1:1 bis 0,35:1, am bevorzugtesten 0,15:1 bis 0,3:1 beträgt.

4. Verfahren nach Anspruch 1, wobei in Schritt (i) das Reaktionsgemisch für eine Zeit, die ausreicht, um mindestens 80 % des Schwefels zu verbrauchen, im Temperaturbereich von 150 °C bis 200 °C gehalten wird.

5. Verfahren nach Anspruch 1 oder 4, wobei das Umsetzen von Schwefel mit Resorcin bei Vorhandensein eines basischen oder sauren Katalysators durchgeführt wird.

6. Verfahren nach Anspruch 5, wobei der basische oder saure Katalysator aus Natriumhydroxid, Kaliumhydroxid und p-Toluolsulfonsäure ausgewählt ist.

7. Verfahren zur Herstellung einer Kautschukzusammensetzung, umfassend:
(i) Mischen eines Kautschuks und
(ii) eines Diresorcinolsulfids, das nach dem Verfahren nach Anspruch 1 hergestellt wurde.

8. Verfahren nach Anspruch 7, ferner umfassend eine Schwefeldonorverbindung zusätzlich zum Diresorcinolsulfid, wobei die Schwefeldonorverbindung vorzugsweise elementarer Schwefel ist.

9. Verfahren nach Anspruch 7 oder 8, wobei das Diresorcinolsulfid durch die Folgende Formel definiert ist: 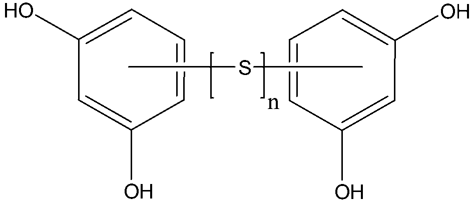 wobei n eine ganze Zahl von 1 bis 8 ist.

10. Verfahren nach einem der Ansprüche 7 bis 9, wobei das Diresorcinolsulfid durch die folgende Formel definiert ist: 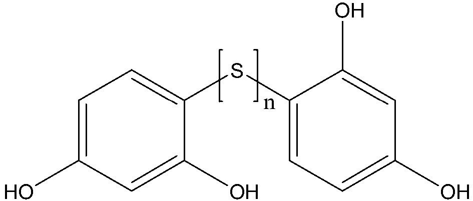 wobei n eine ganze Zahl von 1 bis 8 ist.

11. Verfahren nach einem der Ansprüche 7 bis 10, wobei der Kautschuk Naturkautschuk ist oder der Kautschuk eine Mischung aus Naturkautschuk und einem synthetischen Kautschuk ist.

12. Verfahren nach einem der Ansprüche 7 bis 11, wobei der Kautschuk ausgewählt ist aus Naturkautschuk, Polybutadienkautschuk, Styrol-Butadien-Kautschuk, Polyisopren, Butylkautschuk, Halobutylkautschuk, Polychloropren, Styrol/Isopren/Butadien-Kautschuk, Copolymeren von 1,3-Butadien oder Isopren mit Monomeren wie Styrol, Acrylnitril und Methylmethacrylat, Ethylen/Propylen-Terpolymeren und Kombinationen davon.

13. Verfahren nach einem der Ansprüche 7 bis 12, wobei die Zusammensetzung 0,1 phr bis 15 phr Diresorcinolsulfid enthält.

14. Verfahren nach einem der Ansprüche 7 bis 13, wobei ferner ein Vulkanisationssystem, das einen Beschleuniger beinhaltet, mit dem Kautschuk und dem Diresorcinolsulfid vermischt wird.

15. Verfahren zur Herstellung einer vulkanisierten Zusammensetzung, umfassend:
(i) Herstellen einer Kautschukzusammensetzung, die einen Kautschuk, Diresorcinolsulfid und gegebenenfalls ein anderes Härtungsmittel als Diresorcinolsulfid beinhaltet, wobei das Diresorcinolsulfid nach Anspruch 1 hergestellt wird; und
(ii) Vulkanisieren der Kautschukzusammensetzung.

## Revendications

1. Procédé de préparation de sulfure de dirésorcinol, le procédé comprenant la réaction de soufre avec du résorcinol, comprenant :
(i) la réaction de soufre avec du résorcinol à une température comprise entre 150 °C et 200 °C pour former un mélange réactionnel ; et
(ii) le chauffage du mélange réactionnel à une température comprise entre 205 °C et 250 °C.

2. Procédé selon la revendication 1, dans lequel ledit soufre représente S₈.

3. Procédé selon la revendication 1, dans lequel le rapport molaire entre le S₈ et le résorcinol est compris entre 0,045:1 et 0,45:1, de préférence entre 0,1:1 et 0,35:1, et plus préférentiellement entre 0,15:1 et 0,3:1.

4. Procédé selon la revendication 1, dans lequel, à l'étape (i), le mélange réactionnel est maintenu dans la plage de températures de 150 °C à 200 °C pendant une durée suffisante pour consommer au moins 80 % du soufre.

5. Procédé selon les revendications 1 ou 4, dans lequel la réaction du soufre avec le résorcinol est effectuée en présence d'un catalyseur basique ou acide.

6. Procédé selon la revendication 5, dans lequel le catalyseur basique ou acide est choisi parmi l'hydroxyde de sodium, l'hydroxyde de potassium et l'acide paratoluènesulfonique.

7. Procédé de formation d'une composition de caoutchouc comprenant :
(i) le mélange d'un caoutchouc et
(ii) d'un sulfure de dirésorcinol préparé selon le procédé de la revendication 1.

8. Procédé selon la revendication 7, comprenant en outre un composé donneur de soufre en plus du sulfure de dirésorcinol, de préférence lorsque le composé donneur de soufre est du soufre élémentaire.

9. Procédé selon la revendication 7 ou 8, dans lequel le sulfure de dirésorcinol est défini par la formule suivante : 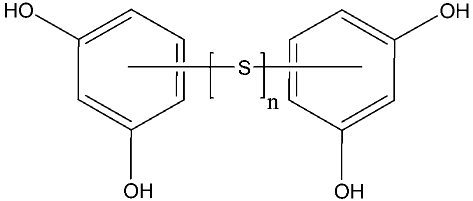 où n représente un entier de 1 à 8.

10. Procédé selon l'une quelconque des revendications 7 à 9, dans lequel le sulfure de dirésorcinol est défini par la formule suivante : 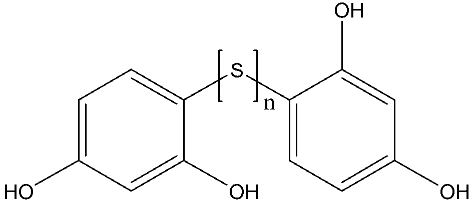 où n représente un entier de 1 à 8.

11. Procédé selon l'une quelconque des revendications 7 à 10, dans lequel le caoutchouc est un caoutchouc naturel ou un mélange de caoutchouc naturel et de caoutchouc synthétique.

12. Procédé selon l'une quelconque des revendications 7 à 11, dans lequel le caoutchouc est choisi parmi le caoutchouc naturel, le caoutchouc polybutadiène, le caoutchouc styrènebutadiène, le polyisoprène, le caoutchouc butyle, le caoutchouc halobutyle, le polychloroprène, le caoutchouc styrène/isoprène/butadiène, les copolymères de 1,3-butadiène ou d'isoprène avec des monomères tels que le styrène, l'acrylonitrile et le méthacrylate de méthyle, les terpolymères d'éthylène/propylène, et leurs combinaisons.

13. Procédé selon l'une quelconque des revendications 7 à 12, dans lequel la composition comprend de 0,1 phr à 15 phr de sulfure de dirésorcinol.

14. Procédé selon l'une quelconque des revendications 7 à 13, dans lequel, en outre, une formulation de durcissement comprenant un accélérateur est mélangée avec le caoutchouc et le sulfure de dirésorcinol.

15. Procédé de préparation d'une composition vulcanisée comprenant :
(i) la préparation d'une composition de caoutchouc comprenant un caoutchouc, du sulfure de dirésorcinol et un agent de durcissement optionnel autre que le sulfure de dirésorcinol, le sulfure de dirésorcinol étant préparé selon la revendication 1 ; et
(ii) le durcissement de la composition de caoutchouc.
